# FASCICULE DE BREVET EUROPEEN

(11) **EP 4 007 789 B1**
(45) Date de publication et mention de la délivrance du brevet: **24.07.2024**
(21) Numéro de dépôt: 21782765.8
(22) Date de dépôt: 06.10.2021
(51) Int. Cl.: C08G 73/02, C10M 149/22

(54) **PROCÉDÉ CONTINU DE POLYMÉRISATION OU D'OLIGOMÉRISATION DE DIPHÉNYLAMINES**
KONTINUIERLICHES VERFAHREN ZUR POLYMERISATION ODER OLIGOMERISIERUNG VON DIPHENYLAMINEN
CONTINUOUS PROCESS FOR THE POLYMERIZATION OR OLIGOMERIZATION OF DIPHENYLAMINES

(30) Priorité: 06.10.2020 FR 2010199
(43) Date de publication de la demande: 08.06.2022
(73) Titulaire: NYCO, 75008 Paris (FR)
(72) Inventeur: TRAVERT, Yves, 95610 Eragny sur Oise (FR); HERVE, Grégoire, 75012 Paris (FR)
(74) Mandataire: Jacobacci Coralis Harle
(86) Numéro de dépôt international: PCT/EP2021/077622
(87) Numéro de publication internationale: WO 2022/074081

(56) Documents cités:
- EP-A1- 0 734 432
- WO-A1-2019/113640
- US-A1- 2017 166 690
- ZHANG FEIXIA ET AL: "Intensified liquid/liquid mass transfer in corning Advanced-FlowTM Reactors", vol. 24, 1 January 2011 (2011-01-01), IT, pages 1369 - 1374, XP055816023, ISSN: 1974-9791, Retrieved from the Internet <URL:https://www.aidic.it/cet/11/24/229.pdf> [retrieved on 20210621], DOI: 10.3303/CET1124229

## Description

### Domaine technique

La présente invention concerne le domaine technique des antioxydants polymériques qui sont utilisés dans les lubrifiants. Elle concerne en particulier la fabrication sans solvant d'antioxydants qui sont des oligomères ou polymères d'au moins une diphénylamine et éventuellement au moins une phényl α-naphtylamine.

### Arrière-plan technologique

Les antioxydants à base de diphénylamine et/ou de naphtylamine sont bien connus et largement utilisés dans le domaine des lubrifiants. Ils peuvent notamment être utilisés sous forme monomérique, dans des lubrifiants de performance standard, mais des antioxydants à base de diphénylamine et/ou de naphtylamine sous forme oligomérique ou polymérique ont été développés pour leur utilisation dans des lubrifiants de haute performance.

Dans le domaine ci-dessus, différents procédés ont déjà été décrits dans l'art antérieur pour synthétiser des oligomères ou polymères d'au moins une diphénylamine et éventuellement au moins une phényl α-naphtylamine.

Ainsi, les demandes de brevet US 2019/0127526, EP 0 734 432, EP 0 799 289, FR 2 832 417, EP 2 217 687, WO 2008/022028, US 3,494,233 et WO 95/17488 décrivent des procédés de préparation d'oligomères ou de polymères comprenant au moins un motif de répétition diphénylamine et/ou phényl α-naphtylamine.

A titre d'exemple, le document EP 0 734 432 décrit un procédé de préparation en discontinue d'une composition de stabilisant antioxydant qui est le produit de la réaction entre une N-aryl-naphtylamine, une diphénylamine, un peroxyde organique et un solvant. La réaction est mise en oeuvre dans une colonne à distillation. La composition obtenue présente un couleur marron (exemple 2).

Tous ces procédés sont des procédés discontinus, aussi désignés par les termes « en batch », c'est-à-dire que le procédé est mis en oeuvre dans un réacteur clos, dans lequel les réactifs sont introduits, la réaction de polymérisation est menée à bien, puis à la fin de la réaction les produits sont isolés à partir du milieu réactionnel.

Les réacteurs de type batch et les réacteurs continus se distinguent fortement, pour des raisons techniques et pour des raisons pratiques. Sur le plan technique, pour des réactions exothermiques par exemple, la taille du réacteur discontinu peut être limitée par le transfert de chaleur. Dans des réacteurs de grande capacité, il est souvent nécessaire de diluer les réactifs par ajout de solvant pour être capable de contrôler l'exothermie de la réaction ou de limiter la taille du réacteur. Sur le plan pratique, un procédé discontinu nécessite à la fin de la réaction la dépressurisation du réacteur, son refroidissement, son ouverture, et sa vidange pour récupérer le mélange réactionnel dans des bonnes conditions de sécurité ; ces opérations discontinues sont complexes et coûteuses en main d'oeuvre.

Certains procédés de l'art antérieur impliquent en outre une utilisation d'au moins un solvant pour diluer les réactifs. Que le procédé soit discontinu ou continu, l'utilisation de solvants présente des inconvénients d'ordre énergétique, notamment en termes de coût de la séparation ou de chauffage d'une masse plus importante, environnemental, notamment en ce qui concerne les rejets, et économiques, notamment en termes de coût de l'investissement de l'étape de séparation, de coût du solvant et/ou de diminution des vitesses de réaction.

Enfin, la mise en oeuvre de procédés d'oligomérisation et/ou polymérisation discontinus est souvent confrontée à des difficultés de reproduction des propriétés des polymères ou oligomères d'un batch à l'autre, notamment en termes de viscosité, de couleur, de point éclair, de teneur en monomère résiduel qui peuvent être liés à une variation plus ou moins importante de la polydispersité.

Dans le milieu des lubrifiants, notamment des lubrifiants pour l'aéronautique et/ou l'automobile, la couleur des lubrifiants et des additifs est un paramètre important, car un lubrifiant visuellement sombre est souvent associé à un lubrifiant usagé. Comparativement, un lubrifiant visuellement clair est souvent associé à un lubrifiant neuf. La reproductibilité des paramètres des oligomères et/ou polymères influençant leur couleur d'une synthèse à l'autre est par conséquent un point important et qui gagnerait à être optimisé.

### Exposé de l'invention

Dans ce cadre, la Demanderesse a démontré qu'il est possible de préparer des oligomères ou polymères comprenant au moins un motif de répétition diphénylamine et éventuellement au moins un motif de répétition phényl α-naphtylamine en utilisant un procédé au moins partiellement continu, lequel présente de très nombreux avantages par rapport aux procédés discontinus précédemment décrits.

### Résumé de l'invention

Ainsi, la présente invention concerne un procédé de préparation d'au moins un oligomère et/ou polymère comprenant au moins un motif de répétition diphénylamine et éventuellement au moins un motif de répétition phényl α-naphtylamine, comprenant les étapes de :
(a) introduction dans un réacteur adapté de :
   - au moins une diphénylamine,
   - éventuellement au moins une phényl α-naphtylamine,
   - au moins un peroxyde organique, et
   - au moins un lubrifiant ester ;
(b) polymérisation ou oligomérisation de la diphénylamine et éventuellement de la phényl α-naphtylamine pour obtenir un mélange comprenant au moins un oligomère ou un polymère comprenant au moins un motif diphénylamine et éventuellement au moins un motif phényl α-naphtylamine ; et
(c) soumission du mélange obtenu à l'étape (b) à des conditions adaptées pour réduire et/ou éliminer au moins une partie des réactifs résiduels et/ou des sous-produits de réaction autres que les oligomères ou polymères comprenant au moins un motif diphénylamine et éventuellement au moins un motif phényl α-naphtylamine,
   dans lequel les étapes (a) et (b) sont mises en oeuvre en continu et dans lequel l'étape (b) est réalisée à une température allant de 180°C à 250°C.

Selon l'invention, une température allant de 180°C à 250°C comprend les valeurs suivantes ou tout intervalle entre ces valeurs : 180 ; 185 ; 190 ; 195 ; 200 ; 205 210 ; 215 ; 22 0 ; 225 ; 230 ; 235 ; 240 ; 245 ; 250.

L'étape (b) est réalisée à une température allant de 180°C à 250°C, de préférence allant de 180°C à 230°C.

Selon une caractéristique de l'invention, le mélange obtenu à l'étape (b) comprend une teneur en peroxyde n'ayant pas réagi inférieure ou égale à 60%%, de préférence inférieure ou égale à 45% et typiquement inférieure ou égale à 40%, la teneur en peroxyde étant déterminée par chromatographie en phase gazeuse.

Selon une autre caractéristique de l'invention, le mélange obtenu à l'étape (b) comprend une teneur en monomères résiduels inférieure ou égale à 25%, de préférence inférieure ou égale à 10% et typiquement inférieure ou égale à 5%, la teneur en monomères résiduels est un pourcentage en masse déterminé par chromatographie en phase gaz (GC) et supercritique (SFC).

Par rapport aux procédés de l'art antérieur, ce procédé présente notamment un temps de cycle réduit, une amélioration de la qualité de l'oligomère ou du polymère obtenu, notamment en termes de couleur, une variabilité fortement réduite au niveau des caractéristiques du produit telles que sa viscosité, sa polydispersité, son point éclair, sa couleur et/ou sa teneur en monomère résiduel, une sécurité accrue, des avantages environnementaux, une maintenance simplifiée, un gain de place et un confort d'utilisation.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Pour le reste de la description, à moins qu'il n'en soit spécifié autrement, l'indication d'un intervalle de valeurs « de X à Y » ou « entre X et Y », dans la présente invention, s'entend comme incluant les valeurs X et Y.

### Description détaillée

Par « en continu », on désigne, dans la présente description, la signification classique dans l'art. Notamment, on désigne ainsi une mise en oeuvre d'un procédé dans lequel l'alimentation en au moins un des réactifs et/ou le soutirage de tout ou partie du contenu du réacteur sont effectués de façon continue, de préférence avec un débit identique en entrée et en sortie du réacteur. De préférence, le procédé mis en oeuvre en continu selon l'invention est tel que le contrôle des alimentations, du soutirage et des autres conditions de polymérisation assure des conditions de fonctionnement stationnaire dans le réacteur.

Dans un mode de réalisation, toutes les étapes du procédé selon l'invention sont mises en oeuvre en continu.

Par « polymère » d'au moins une diphénylamine et éventuellement au moins une phényl α-naphtylamine, on désigne dans la présente invention un composé comprenant la répétition d'au moins deux motifs diphénylamine et/ou phényl α-naphtylamine.

Par « oligomère » d'au moins une diphénylamine et éventuellement au moins une phényl α-naphtylamine, on désigne dans la présente invention un polymère d'au moins une diphénylamine et éventuellement au moins une phényl α-naphtylamine qui comprend entre 2 et 10 motifs de répétition, ou un mélange de tels composés. Il peut notamment s'agir d'un dimère, d'un trimère, d'un tétramère, d'un pentamère, d'un hexamère, d'un heptamère, d'un octamère, d'un nonamère, d'un décamère et/ou d'un mélange quelconque de tels composés. De préférence, l'oligomère contient au moins 90% en masse de dimère, de trimère, de tétramère, de pentamère ou d'un mélange de tels composés.

De préférence, la proportion de monomère résiduel dans l'oligomère ou le polymère obtenu à l'issue de l'étape (b) est inférieure ou égale à 10% en masse, en particulier inférieure ou égale à 5% en masse.

Par « diphénylamine », on désigne un composé de formule (I) : 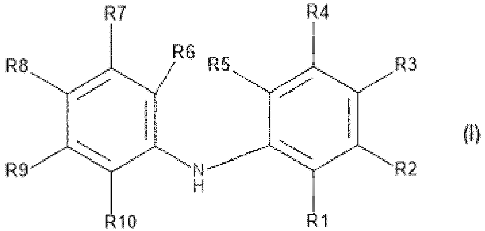 dans laquelle chacun parmi R1 à R10 est choisi indépendamment parmi un atome d'hydrogène, un groupe alkyle et un groupe aralkyle.

Dans un mode de réalisation, la au moins une diphénylamine de formule (I) est une diphénylamine alkylée, c'est-à-dire que au moins un parmi R1 à R10 est un groupe alkyle ou aralkyle. Dans un autre mode de réalisation, au moins un parmi R1 à R5 est un groupe alkyle ou aralkyle, et au moins un parmi R6 à R10 est un groupe alkyle ou aralkyle.

Par « alkyle », on désigne dans la présente invention un groupe hydrocarboné saturé, linéaire, ramifié ou cyclique, comprenant de 1 à 24 atomes de carbone. De préférence, un groupe alkyle comprend de 1 à 12 atomes de carbone. Parmi les groupes alkyles, on peut notamment citer le groupe méthyle, le groupe éthyle, le groupe n-propyle, le groupe iso-propyle, le groupe n-butyle, le groupe tert-butyle, le groupe iso-butyle, le groupe n-pentyle, le groupe iso-pentyle, le groupe n-hexyle, le groupe cyclohexyle, le groupe n-heptyle, le groupe n-octyle, le groupe tert-octyle, le groupe iso-octyle, le groupe n-nonyle, le groupe n-décyle, le groupe n-undécyle, le groupe n-dodécyle et le groupe iso-dodécyle. Dans un mode de réalisation particulier, un groupe alkyle est choisi dans le groupe constitué par le groupe tert-butyle et le groupe tert-octyle.

Par « aralkyle », on désigne dans la présente invention un groupe alkyle dont au moins un des atomes de carbone est substitué par un groupe aryle. Parmi les exemples de groupes aralkyles, on peut citer notamment le groupe 1-méthyl 1-phényléthyle.

Par « groupe aryle », on désigne dans la présente invention un groupe monocyclique ou polycyclique aromatique hydrocarboné. Chaque cycle aromatique ou polyaromatique comprend 5 à 14 atomes. Parmi les exemples de groupes aryles, on peut citer notamment le groupe phényle.

Dans un mode de réalisation, la diphénylamine de formule (I) est choisie dans le groupe constitué par la N,N-diphénylamine, la N,N-di-(p-tert-butylphényl)amine, la N,N-di-(p-tert-octylphényl)amine, la N-(p-tert-butylphényl)-N-phénylamine, la N-(p-tert-octylphényl)-N-phénylamine, la N-(p-tert-butylphényl)-N-(p-tert-octylphényl)amine et un quelconque mélange de celles-ci.

Les diphénylamines selon l'invention peuvent se présenter isolées, ou en mélange entre elles. Par exemple, elles peuvent se présenter sous la forme d'un mélange de N,N-diphénylamine, de N,N-di-(p-tert-butylphényl)amine, de N,N-di-(p-tert-octylphényl)amine, de N-(p-tert-butylphényl)-N-phénylamine, de N-(p-tert-octylphényl)-N-phénylamine et de N-(p-tert-butylphényl)-N-(p-tert-octylphényl)amine, en particulier le mélange connu sous la dénomination Irganox^{®} L57 et de numéro CAS 68411-46-1.

Par phényl α-naphtylamine, on désigne selon la présente invention un composé de formule (II) : 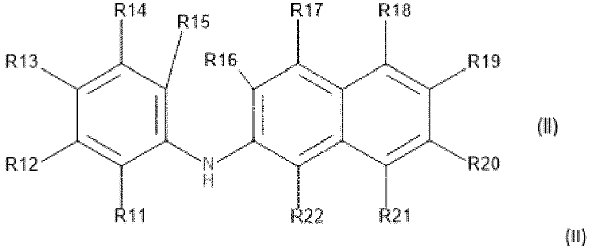 dans laquelle chacun parmi R11 à R22 est choisi indépendamment parmi un atome d'hydrogène et un groupe alkyle.

Dans un mode de réalisation, au moins un parmi R11 à R22 est un groupe alkyle. Dans un mode de réalisation, un seul parmi R11 à R22 est un groupe alkyle, en particulier un groupe tert-octyle.

Dans un mode de réalisation particulier, la phényl α-naphtylamine est la N-phényl 1,1,3,3-tétraméthylbutylnaphthalén 1-amine, de numéro CAS 68259-36-9.

Dans un mode de réalisation particulièrement préféré, la au moins une diphénylamine se présente sous la forme d'un mélange de N,N-diphénylamine, de N,N-di-(p-tert-butylphényl)amine, de N,N-di-(p-tert-octylphényl)amine, de N-(p-tert-butylphényl)-N-phénylamine, de N-(p-tert-octylphényl)-N-phénylamine et de N-(p-tert-butylphényl)-N-(p-tert-octylphényl)amine, et la au moins une phényl α-naphtylamine est la N-phényl 1,1,3,3-tétraméthylbutylnaphthalén 1-amine.

Les proportions relatives en masse des deux types de motifs diphénylamine et phényl α-naphtylamine au sein du polymère ou de l'oligomère peuvent varier dans une large mesure de 0/100 à 100/0. De préférence, la proportion relative en masse diphénylamine/phényl α-naphtylamine est comprise entre 100/0 et 50/50, notamment comprise entre 100/0 et 90/10, en particulier comprise entre 100/0 et 95/5. Dans un mode de réalisation particulier, le polymère ou l'oligomère obtenu par le procédé selon la présente invention ne comprend que des motifs diphénylamine. L'homme du métier est à même d'ajuster les quantités de diphénylamine et de phényl α-naphtylamine à introduire dans le réacteur en fonction notamment de la structure souhaitée de l'oligomère ou du polymère à synthétiser et des caractéristiques thermiques recherchées.

Dans un mode de réalisation, l'étape (a) est une étape d'introduction dans un réacteur adapté de :
- au moins une diphénylamine,
- au moins une phényl α-naphtylamine,
- au moins un peroxyde organique, et
- au moins un lubrifiant ester.

Dans ce mode de réalisation, les polymères et/ou oligomères obtenus à l'issue du procédé selon l'invention comprennent des motifs de répétition diphénylamine et des motifs de répétition phényl α-naphtylamine.

Bien entendu, comme les étapes (a) et (b) du procédé selon l'invention sont mises en oeuvre en continu, et conduisent à la consommation en continu de tout ou partie des réactifs introduits dans le réacteur, toutes les proportions et quantités de chacun des réactifs mentionnées dans la présente demande correspondent à des proportions et quantités au moment de leur introduction dans le réacteur.

La au moins une diphénylamine et/ou la au moins une phényl α-naphtylamine peuvent être introduites dans le réacteur soit pures, soit sous forme diluée dans au moins un diluant.

Par « diluant », on désigne dans la présente invention un composé qui n'a pas vocation à être éliminé ou séparé du polymère ou de l'oligomère obtenu en fin de réaction, notamment à l'étape (c). Il peut par exemple s'agir d'un diluant qui a vocation à être présent dans une composition lubrifiante comprenant le polymère ou l'oligomère obtenu par un procédé selon l'invention. De préférence, le diluant est un lubrifiant ester, en particulier le lubrifiant ester qui est introduit dans le réacteur à l'étape (a).

Dans un mode de réalisation, la au moins une diphénylamine et/ou la au moins une phényl α-naphtylamine sont introduites dans le réacteur sous la forme d'une solution dans le lubrifiant ester. Dans un mode de réalisation, la solution comprenant la au moins une diphénylamine et/ou la au moins une phényl α-naphtylamine ne comprend pas d'autre diluant que le lubrifiant ester. De préférence, la au moins une diphénylamine et/ou la au moins une phényl α-naphtylamine est sous la forme d'une solution dans le lubrifiant ester en une quantité de 40 à 80% en masse. En particulier, la au moins une diphénylamine et/ou la au moins une phényl α-naphtylamine est sous la forme d'une solution à environ 60% en masse dans le lubrifiant ester. Dans un mode de réalisation particulier, la au moins une diphénylamine et la au moins une phényl α-naphtylamine sont introduites dans le réacteur sous la forme d'une solution dans le lubrifiant ester, comprenant la au moins une diphénylamine et la au moins une phényl α-naphtylamine.

Les réactifs sont introduits dans le réacteur à l'étape (a) du procédé selon l'invention en absence de solvant. Par « solvant », on désigne selon la présente invention un composé dans lequel au moins un des réactifs peut être au moins partiellement dissous et/ou dispersé, qui ne réagit pas dans les conditions de réaction, et qui a vocation à être éliminé ou séparé du polymère ou de l'oligomère obtenu en fin de réaction. Un solvant se différencie d'un diluant au moins en ce que sa température d'ébullition est généralement inférieure à 250°C, ce qui permet sa séparation du polymère ou de l'oligomère obtenu par évaporation en fin de réaction.

Par « en absence de solvant », on désigne dans la présente invention des conditions dans lesquelles la solution concernée comprend moins de 20% en masse de solvant, de préférence moins de 10% en masse de solvant, notamment moins de 5% en masse de solvant, en particulier moins de 1% en masse de solvant.

Par « motif de répétition » diphénylamine ou phényl α-naphtylamine, on désigne le fait que, dans la structure finale de l'oligomère ou du polymère obtenu selon l'invention, est présent au moins un, de préférence au moins deux, motifs diphénylamine ou phényl α-naphtylamine respectivement.

Les motifs de répétition diphénylamine et phényl α-naphtylamine peuvent être positionnés de toute façon les uns par rapport aux autres dans la structure du polymère ou de l'oligomère obtenu selon l'invention. Ainsi, le polymère ou l'oligomère peut comprendre, au moins sur une partie de sa structure, une alternance régulière de motifs de répétition diphénylamine et phényl α-naphtylamine. Il peut comprendre, au moins sur une partie de sa structure, une répartition aléatoire des motifs de répétition diphénylamine et phényl α-naphtylamine. Il peut enfin comprendre, sur au moins une partie de sa structure, un bloc comprenant un seul type de motif de répétition diphénylamine ou phényl α-naphtylamine.

Dans un mode de réalisation, le polymère et/ou oligomère obtenu par le procédé selon l'invention ne comprend dans sa structure que des motifs de répétition diphénylamine et phényl α-naphtylamine. Dans un autre mode de réalisation, le polymère et/ou oligomère obtenu par le procédé selon l'invention ne comprend dans sa structure que des motifs de répétition diphénylamine.

Par « peroxyde organique », on désigne dans la présente invention n'importe quel composé organique comprenant deux atomes d'oxygène reliés entre eux par une liaison covalente simple. De préférence, il s'agit d'un composé de formule (III) :

R₂₃-O-O-R₂₄ (III)

dans laquelle R₂₃ et R₂₄ sont indépendamment l'un de l'autre un groupe alkyle.

Dans certains modes de réalisation, R₂₃ et R₂₄ sont identiques. Par exemple, il peut s'agir de peroxyde de di-tert-butyle. Le peroxyde organique est un initiateur de la polymérisation et/ou de l'oligomérisation des différents motifs de répétition. Le peroxyde organique peut être présent dans le réacteur en toute proportion adaptée par rapport aux autres réactifs, notamment par rapport à la au moins une diphénylamine, à la au moins une phényl α-naphtylamine, et au lubrifiant ester. Par exemple, le peroxyde organique peut être présent en une proportion de 10 à 50 % en masse par rapport à la masse totale du peroxyde organique, la quantité sera ajustée selon la masse moléculaire moyenne et la viscosité du polymère souhaitées, de la au moins une diphénylamine, de la au moins une phényl α-naphtylamine et du lubrifiant ester et de la quantité de peroxyde perdue en cours de réaction. Le peroxyde organique est de préférence liquide dans les conditions de réaction. Le peroxyde est de préférence volatil pour permettre l'élimination en fin de réaction du peroxyde résiduel le cas échéant.

Le peroxyde organique peut être introduit dans le réacteur soit pur, soit sous forme diluée dans un diluant. De préférence, le diluant est un lubrifiant ester, en particulier le lubrifiant ester qui est introduit dans le réacteur à l'étape (a). Dans un mode de réalisation, la solution de peroxyde organique ne comprend pas de solvant. De préférence, le peroxyde organique est sous la forme d'une solution dans le lubrifiant ester en une quantité de 30 à 70% en masse. En particulier, le peroxyde organique est sous la forme d'une solution à environ 50% en masse dans le lubrifiant ester.

Le peroxyde organique peut être introduit en une quantité de 1,0 à 2,0 équivalents molaires, de préférence de 1,3 à 1,6 équivalents molaires, par rapport à la quantité totale de diphénylamine et de phényl α-naphtylamine.

Par « lubrifiant ester », on désigne dans la présente invention tout ester ou mélange d'esters ayant des propriétés lubrifiantes. De préférence, le polymère ou l'oligomère obtenu à l'issue du procédé selon la présente invention est destiné à être utilisé en tant qu'agent antioxydant dans une composition lubrifiante comprenant au moins ledit lubrifiant ester. De préférence, le lubrifiant ester utilisé selon l'invention est saturé, c'est-à-dire qu'il ne comprend pas de liaison chimique double ou triple hormis la liaison C=O de chaque fonction ester. Parmi les lubrifiants esters susceptibles d'être utilisés dans un procédé selon l'invention, on peut citer les monoesters d'acétate d'octyle, d'acétate de décyle, d'acétate d'octadécyle, de myristate de méthyle, de stéarate de butyle, ainsi que les polyesters de phthalate de dibutyle, d'adipate de di-octyle, d'azélate de bis-2-éthylhexyle et de sébacate de bis-2-éthylhexyle. Le lubrifiant du type ester de polyol peut être préparé à partir de pentaérythritol technique ou de triméthylol propane et d'un mélange d'acides carboxyliques linéaire et/ou branchés ayant de 4 à 18 atomes de carbone, par exemple ayant 9 atomes de carbone. Le pentaérythritol technique est un mélange qui comprend environ de 85% à 92% en poids de monopentaérythritol et de 8% à 15% en poids de dipentaérythritol. Un pentaérythritol technique classique du commerce contient environ 88% en poids de monopentaérythritol et environ 12% en poids de dipentaérythritol, par rapport au poids total du lubrifiant ester. Le pentaérythritol technique peut contenir également une certaine quantité de tri- et tétra-pentaérythritols qui sont habituellement formés comme sous-produits au cours de la production du pentaérythritol technique. Le lubrifiant ester peut notamment être choisi dans le groupe constitué par le tri-nonanoate de triméthylolpropane et les esters préparés à partir de pentaérythritol et d'au moins un acide carboxylique ramifié comprenant 9 atomes de carbone.

Dans un mode de réalisation, le lubrifiant ester est linéaire. Dans un autre mode de réalisation, le lubrifiant ester est ramifié. L'homme du métier est à même de sélectionner le lubrifiant ester à utiliser dans le procédé selon l'invention en fonction notamment de la nature de la au moins une diphénylamine, de la au moins une phényl α-naphthylamine, du peroxyde, des propriétés désirées pour la solution d'oligomère et/ou de polymère et de lubrifiant ester à préparer et/ou du domaine d'utilisation envisagé pour la solution d'oligomère et/ou de polymère et de lubrifiant ester obtenue.

Le lubrifiant ester est introduit dans le réacteur en une quantité adaptée pour obtenir un mélange souhaité de l'oligomère ou du polymère dans le lubrifiant ester. Par exemple, la solution soutirée du réacteur peut comprendre entre 20 et 60% en masse, notamment environ entre 30 et 50% en masse, de l'oligomère ou du polymère dans le lubrifiant ester selon la nature de l'ester.

Les étapes (a) et (b) peuvent être mises en oeuvre dans tout réacteur adapté à une mise en oeuvre en continu. Il peut s'agir notamment d'un réacteur de type mélangeur statique, mélangeur disperseur, mélangeur broyeur à cylindre, extrudeuse ou mélangeur à axe horizontal. En particulier, il peut s'agir d'un réacteur continu de type G1 à G4 tel que commercialisé par Corning. Le volume utile du réacteur peut être compris notamment entre 50 mL et 5 litres, de préférence entre 50 mL et 1 litre (et convient, par exemple, le réacteur type Corning utilisé dans les exemples après). L'homme du métier est à même de sélectionner le réacteur adapté en fonction de la nature des réactifs, des conditions de réaction, notamment le temps de séjour, et du volume à produire notamment.

Dans un mode de réalisation particulier, le réacteur est un réacteur de type mélangeur statique G1 avec 10 modules fluidiques. Le système peut comprendre en outre deux lignes de dosage connectées au réacteur, ainsi qu'au moins un capteur et au moins un afficheur de température. Un régulateur de contre-pression et un dispositif permettant le contrôle de la température peuvent également être compris dans le système.

La pression en entrée du réacteur peut être comprise entre 1 et 20 bars. La pression en entrée du réacteur peut notamment être comprise entre 5 et 20 bars, de préférence entre 15 et 19 bars, notamment pour les réacteurs dans lesquels tous les réactifs sont en phase liquide. Ces gammes de pression sont, par exemple, adaptées pour le réacteur type Corning utilisé dans les exemples après. En effet, la pression en entrée (ainsi que la contrepression en sortie) est un paramètre qui est lié au type de réacteur utilisé et qui peut donc être modifié en fonction de ce dernier. De plus, la pression est également inhérente à la température de réaction utilisée lors de l'étape (b) (paramètre subi et non un paramètre ajustable).

Dans le réacteur, les réactifs peuvent être notamment en phase liquide ou gazeuse. Dans certains types de réacteurs, l'ensemble des réactifs sont en phase liquide, et, dans ce cas, la pression en entrée du réacteur peut être comprise entre 5 et 20 bars, de préférence entre 15 et 19 bars. Dans d'autres types de réacteurs, une partie des réactifs sont en phase liquide et une autre partie des réactifs sont en phase gazeuse. Dans ce cas, la pression en entrée du réacteur peut être plus basse et peut être comprise entre 1 et 20 bars.

Bien entendu, l'étape (a) peut comprendre en outre l'introduction dans le réacteur de tout autre réactif, solvant ou diluant nécessaire à la mise en oeuvre de l'étape (b) ou d'une étape ultérieure du procédé.

L'étape (a) est réalisée en continu, c'est-à-dire qu'au moins l'un des réactifs est introduit en continu dans le réacteur. Le débit d'introduction de chaque réactif dans le réacteur à l'étape (a) peut varier dans le temps, en assurant de préférence un débit d'entrée de l'ensemble des réactifs constant.

Par « réactif » on désigne dans la présente invention tous les composés qui sont introduits dans le réacteur à l'étape (a), notamment la au moins une diphénylamine, la au moins une phényl α-naphtylamine, le au moins un peroxyde organique, et le au moins un lubrifiant ester. Dans le cas où une faible proportion de solvant serait introduite dans le réacteur à l'étape (a), le solvant ne fait pas partie des composés qualifiés de « réactifs ».

Dans un mode de réalisation, le procédé selon l'invention comprend, avant l'étape (a), une étape (a1) de prémélange d'au moins deux parmi la au moins une diphénylamine, la au moins une phényl α-naphtylamine, le lubrifiant ester et le peroxyde organique, pour former une solution les comprenant. Le mélange des réactifs avant leur introduction dans le réacteur contribue notamment à minimiser leur temps de séjour dans le réacteur, en particulier lorsque la solution comprenant au moins deux parmi la au moins une diphénylamine, la au moins une phényl α-naphtylamine, le lubrifiant ester et le peroxyde organique est ensuite soumise à une étape (a2) de préchauffage telle que décrite ci-après.

Dans un mode de réalisation, l'étape (a1) est le prémélange de la au moins une diphénylamine et de la au moins une phényl α-naphtylamine, éventuellement en présence du lubrifiant ester. Dans un mode de réalisation, l'étape (a1) est le prémélange de la au moins une diphénylamine et du peroxyde organique, éventuellement en présence du lubrifiant ester. Dans un mode de réalisation, l'étape (a1) est le prémélange de la au moins une phényl α-naphtylamine et du peroxyde organique, éventuellement en présence du lubrifiant ester. Dans un mode de réalisation préféré, l'étape (a1) est le prémélange de la au moins une diphénylamine, de la au moins une phényl α-naphtylamine et du peroxyde organique, éventuellement en présence du lubrifiant ester.

Dans un mode de réalisation, le procédé selon l'invention comprend, avant l'étape (a), et le cas échéant après l'étape (a1), une étape (a2) de préchauffage de la au moins une diphénylamine, de la au moins une phényl α-naphtylamine, du lubrifiant ester, du peroxyde organique et/ou de la solution comprenant au moins deux parmi ces derniers obtenus à l'étape (a1) à une température dite « température de préchauffage ». La température de préchauffage est supérieure à la température ambiante, et inférieure ou égale à la température à laquelle l'étape (b) est mise en oeuvre. La température de préchauffage peut être comprise notamment entre 40 et 100°C. Une telle étape de préchauffage contribue notamment à minimiser le temps de séjour des réactifs dans le réacteur.

Les étapes (a1) et/ou (a2) peuvent être indépendamment l'une de l'autre mises en oeuvre soit en continu, soit de façon discontinue. Chacune d'elle peut être mise en oeuvre indépendamment dans un réacteur discontinu, ou dans une partie du réacteur continu connectée à la partie du réacteur continu dans laquelle est mise en oeuvre l'étape (b). De préférence, les étapes (a1) et (a2) sont mises en oeuvre en continu.

Dans le cas où le procédé comprend une étape (a1) de prémélange et/ou (a2) de préchauffage de tout ou partie des réactifs, l'introduction des réactifs de l'étape (a) est réalisée par introduction dans le réacteur notamment des réactifs prémélangés et/ou préchauffés obtenus à l'issue de l'étape (a1) et/ ou (a2).

L'étape (b) peut être mise en oeuvre dans toutes conditions adaptées pour réaliser la polymérisation ou l'oligomérisation radicalaire de la au moins une diphénylamine, éventuellement de la au moins une phényl α-naphtylamine et des éventuels autres réactifs à polymériser ou oligomériser.

La température de l'étape (b) est comprise entre 180°C et 250°C. De préférence, la température est en effet au moins suffisante pour déclencher l'initiation de la réaction par le peroxyde organique. La température est comprise entre 180°C et 250°C, en particulier entre 180°C et 230°C.

Selon l'invention, « une température comprise entre 180°C et 250°C » comprend les valeurs suivantes et tout intervalle compris entre ces valeurs : 180 ; 185 ; 190 ; 195 ; 200 ; 205 ; 210 ; 215 ; 220 ; 225 ; 230 ; 235 ; 240 ; 245 ; 250.

D'après les indications des fabricants de réacteur continu et de façon habituel, il est conseillé afin de transposer une synthèse chimique d'un mode discontinu (batch) en mode continu, d'abaisser la température de réaction par rapport à celle habituellement utilisée pour réaliser la réaction (à savoir ici, d'abaisser la température à une valeur inférieure à 160°C). En effet, le réacteur en continu permet grâce notamment à sa géométrie particulière et à la pression exercée au sein du réacteur (réaction forcée par la pression) d'obtenir une meilleure qualité de mélange et de contacts entre les réactifs des composants de départ et d'améliorer fortement leur contact rendant ainsi inutile l'emploi d'une température de réaction élevée ou identique à celle habituellement utilisée lors d'un procédé en discontinue.

La Demanderesse a cependant découvert qu'au contraire et de manière surprenante et inattendue, que la température utilisée en mode batch à savoir 150-160°C ne conduisait à aucune réaction en mode continu, qu'en augmentant la température de réaction au-delà de la température habituelle de réaction (i.e. : 160°C), il était possible de synthétiser en continue et de manière adéquate (déclenchement de la polymérisation et réaction de polymérisation avec de bon rendement) un oligomère et/ou polymère comprenant au moins un motif de répétition diphénylamine et éventuellement au moins un motif de répétition phényl α-naphtylamine (voir les exemples de réalisation comparatifs et selon l'invention ci-après).

Sans être lié par une quelconque théorie, il semblerait que ce phénomène inattendu (augmentation de la température au lieu de son abaissement) soit lié au fait que la réaction limitante de la synthèse chimique ne soit pas la polymérisation en elle-même, mais la dissociation du peroxyde en radical. Cette derrière réaction est monomoléculaire réversible et ainsi, afin de déplacer l'équilibre de la réaction vers la synthèse d'oligomère et/ou de polymère (i.e. : déplacer l'équilibre vers la droite), il faudrait élever la température de réaction au-delà de celle habituellement utilisée (la pression en sein du réacteur conduirait vraisemblablement à la recombinaison des radicaux en peroxyde de départ, à savoir, la pression favoriserait la réaction inverse).

L'étape (b) peut être mise en oeuvre en présence d'une contrepression (en sortie), notamment pour maintenir sous forme liquide l'ensemble des composés présents dans le réacteur, en particulier l'alcool produit suite à la dégradation du peroxyde organique. La contrepression peut notamment être comprise entre 3 et 20 bars, en particulier comprise entre 10 et 16 bars. Selon l'invention, « une pression comprise entre 3 et 20 bars » comprend les valeurs suivantes et tout intervalle compris entre ces valeurs : 3 ; 4 ; 5 ; 6 ; 7 ; 8 ; 9 ; 10 ; 11 ; 12 ; 13 ; 14 ; 15 ; 16 ; 17 ; 18 ; 19 ; 20.

L'étape (b) s'effectue à une température allant de 180°C à 230°C, en particulier de 190°C à 220°C et à une pression (pression en entrée et contrepression en sortie) de 10 à 16 bars, comme de 15 à 20 bars.

Le temps de séjour des réactifs dans le réacteur peut être adapté par l'homme du métier en fonction notamment du couple température/pression, du débit d'entrée de chaque réactif et de la nature des réactifs. Le temps de séjour des réactifs dans le réacteur est généralement inférieur à 10 minutes, de préférence inférieur à 5 minutes. Le temps de séjour des réactifs dans le réacteur peut notamment être compris entre 1 minute et 5 minutes, voire entre 0 et 1 minute. Un temps de séjour des réactifs trop long peut conduire à des problèmes de pertes de charge importants, liés notamment à la longueur des canaux et nombre de chicanes et d'obstacles, mais aussi à une couleur Gardner de l'échantillon trop élevée par rapport aux exigences dans certains domaines d'application, notamment les huiles pour automobile ou pour l'aviation.

L'échelle de couleur Gardner est une échelle de comparaison visuelle de la couleur des liquides clairs et transparents. Elle comprend 18 niveaux numérotés de 1 à 18 allant du jaune pâle (couleur Gardner 1) jusqu'au marron foncé (couleur Gardner 18). Les couleurs s'intensifient à partir du niveau 1 jusqu'au niveau 18. Cependant, les nuances de clair s'échelonnent du niveau 1 au niveau 11, tandis que les nuances plus foncées s'échelonnent du niveau 12 à 18. En particulier, les niveaux de cette échelle de couleur Gardner peuvent correspondent aux couleurs suivantes :
- échelles 1 à 4 : couleur jaune très pâle à jaune pâle ;
- échelles 5 à 10 : couleur jaune pâle à couleur jaune ;
- échelle 11 à 12 : couleur jaune plus intense à couleur jaune orangé ;
- échelle 13-14 : couleur jaune orangé plus intense à couleur orange ;
- échelle 15-16 : couleur orange plus intense à couleur orange/rouge ;
- échelle 17 : couleur rouge maronné ;
- échelle 18 : couleur marron.

Le procédé continu selon l'invention permet d'obtenir des oligomères et/ou polymères ayant une couleur Gardner relativement modeste, en particulier lorsqu'ils sont en solution dans le lubrifiant ester. La couleur Gardner d'un oligomère et/ou polymère obtenu selon l'invention en solution à 1,5% en masse dans le lubrifiant ester est notamment inférieure ou égale à 12, de préférence comprise entre 9 et 11. Le procédé continu selon l'invention permet une bonne reproductibilité de ces valeurs de couleur Gardner, meilleure notamment que celle obtenue lors de la mise en oeuvre d'un tel procédé en mode discontinu. Tel que mentionné ci-dessus, un niveau de couleur Gardner allant de 9 à 11 après dilution dans l'huile de base du lubrifiant correspond encore à une couleur claire adéquate pour le domaine des lubrifiants et en particulier des lubrifiants pour l'aéronautique ou l'automobile.

L'étape (b) est de préférence suivie par une étape (b1) de soutirage, à partir du réacteur, d'au moins un oligomère ou polymère de diphénylamine et éventuellement au moins une phényl α-naphtylamine, de préférence en solution dans le lubrifiant ester. Le débit de soutirage est de préférence égal au débit d'entrée des réactifs de l'étape (a).

L'étape (c) comprend la soumission du mélange réactionnel obtenu à l'étape (b), éventuellement soutiré à l'étape (b1), et éventuellement refroidi dans une étape (d) telle que décrite ci-après, à des conditions adaptées pour éliminer au moins une partie des réactifs résiduels et/ou des sous-produits de réaction autres que les oligomères ou polymères comprenant au moins un motif diphénylamine et éventuellement au moins un motif phényl α-naphtylamine. Les conditions de mise en oeuvre de l'étape (c) peuvent varier dans une large mesure, et peuvent être adaptées par l'homme du métier notamment en fonction des composés à éliminer, du réacteur utilisé et/ou des conditions de mise en oeuvre de l'étape (b). Dans le cadre de la présente étape (c), le terme « éliminer » un composé et ses variations font référence à la séparation dudit composé des oligomères ou polymères comprenant au moins un motif diphénylamine et éventuellement au moins un motif phényl α-naphtylamine. L'élimination peut notamment être mise en oeuvre par évaporation ou par distillation.

Parmi les réactifs résiduels et/ou des sous-produits de réaction qui sont susceptibles d'être éliminés lors de l'étape (c), on peut citer notamment le peroxyde organique résiduel, la au moins une diphénylamine résiduelle, la au moins une phényl α-naphtylamine résiduelle et le au moins un alcool issu de la décomposition du peroxyde organique. Le au moins un alcool issu de la décomposition du peroxyde organique peut notamment, lorsque le peroxyde organique est le peroxyde de di-tert-butyle, être le tert-butanol. Dans ce cas, l'étape (c) comprend une étape d'élimination, de préférence par évaporation, du tert-butanol.

L'étape (c) peut être notamment mise en oeuvre par évaporation d'au moins une partie des réactifs résiduels et/ou des sous-produits de réaction autres que les oligomères ou polymères comprenant au moins un motif diphénylamine et éventuellement au moins un motif phényl α-naphtylamine. L'évaporation peut être mise en oeuvre de différentes façons. Dans certains modes de réalisation, l'évaporation est mise en oeuvre par décompression d'au moins une partie du réacteur dans lequel a été mise en oeuvre l'étape (b), la décompression conduisant à l'évaporation de tout ou partie dudit ou desdits composés à éliminer. Alternativement ou cumulativement, l'évaporation peut être mise en oeuvre par évaporation sous vide, de préférence après refroidissement comme détaillé à l'étape (d) ci-après, du mélange obtenu à l'issue de l'étape (b) ou (d).

L'étape (c) peut être mise en oeuvre soit en continu, en sortie du réacteur ou de la partie de réacteur dans lequel ou laquelle l'étape (b) a été mise en oeuvre, soit de façon discontinue dans un réacteur distinct. Le réacteur dans lequel est mise en oeuvre l'étape (c) peut par exemple être un évaporateur en colonne.

L'étape (c) peut être en outre suivie ou précédée d'une étape (d) de refroidissement du au moins un oligomère ou polymère obtenu à l'issue de l'étape (b), par exemple soutiré à l'étape (b1), à une température dite « température de refroidissement ». La température de refroidissement est inférieure à la température à laquelle l'étape (b) est mise en oeuvre, et supérieure ou égale à la température ambiante. La température de refroidissement peut notamment être comprise entre 50°C et 90°C, en particulier elle peut être d'environ 70°C.

Le procédé continu selon l'invention présente notamment un temps de cycle réduit, une amélioration de la qualité de l'oligomère ou du polymère obtenu, notamment de sa couleur, une faible variabilité des caractéristiques techniques telles que la couleur et/ou la polydispersité du polymère ou de l'oligomère, une sécurité accrue, des avantages environnementaux, une maintenance simplifiée, un gain de place et un confort d'utilisation par rapport aux procédés discontinus connus dans l'art.

En termes de temps de cycle, le temps de réaction est généralement de l'ordre de quelques minutes, tandis que pour les procédés discontinus le temps de réaction pour une oligomérisation ou polymérisation similaire est généralement de l'ordre de 8 à 15 heures à l'échelle industrielle. Ceci permet notamment un gain conséquent en termes de capacité de production.

En termes de qualité de produit, l'oligomère ou polymère d'au moins une diphénylamine et au moins une phényl α-naphtylamine obtenu à l'issue du procédé selon l'invention présente une coloration satisfaisante et qui peut être plus faible que celle obtenue par les procédés discontinus. En système batch, les variations de couleur sont fortement élargies en comparaison d'un système continu. On peut compter une variation de 4 points Gardner d'un batch à un autre à partir des mêmes conditions opératoires. En système continu comme c'est le cas dans la présente invention, la variation est inférieure à 1 Gardner, et préférentiellement inférieure à 0,5 G. Dans le domaine des lubrifiants haute performance tels que les lubrifiants automobiles, la coloration des lubrifiants et des additifs tels que les antioxydants est une réelle préoccupation dans la mesure où un lubrifiant moins coloré suggère un lubrifiant plus propre, plus neuf, et est donc considéré comme un gage de qualité.

En outre, le procédé selon l'invention permet d'obtenir une performance constante et une bonne reproductibilité, et ainsi une maîtrise de paramètres tels que les masses molaires des oligomères et polymères obtenus, leur polydispersité et/ou le taux d'oligomère ou de polymère dans le lubrifiant ester.

En termes de sécurité, le volume du réacteur étant relativement réduit, la dangerosité de la réaction est fortement diminuée, notamment si l'on considère le risque particulier lié à l'usage d'une réaction exothermique d'oxydation/polymérisation radicalaire, par rapport à une mise en oeuvre sous forme discontinue. Cet élément est un atout indéniable du procédé selon l'invention puisque la réaction d'oxydation et polymérisation est la première source d'accident industriel dans le domaine de la chimie.

En termes environnementaux, les pertes de réactifs tels que les peroxydes sont nettement diminuées par rapport aux procédés discontinus, ce qui conduit à une réduction des déchets et effluents. A titre de comparaison, la perte de peroxyde d'alkyle, par exemple de peroxyde de di-tert-butyle, n'ayant pas réagi dans un procédé batch opéré classiquement entre 140 et 170°C est d'au moins 50%. Le procédé continu selon l'invention permet de réduire drastiquement ces déchets de peroxyde organique par rapport au procédé discontinu, puisque des valeurs allant jusqu'à moins de 10% de peroxyde non réagi peuvent être atteintes. Dans un mode de réalisation selon l'invention, au moins 90% du peroxyde organique, de préférence au moins 95%, en particulier au moins 99%, réagit au cours de la réaction à l'étape (b). Industriellement, la diminution de la quantité de peroxyde résiduel à la fin de l'étape (b) permet notamment une réduction du risque chimique lié à la gestion des effluents dangereux, puisque les peroxydes sont explosibles dans certaines conditions, notamment sur des temps de stockage longs en présence d'autres réactifs ou impuretés volatiles. Une concentration faible, voire nulle, en peroxyde organique au sein et en sortie du réacteur est une garantie d'amélioration de la sécurité au niveau de l'installation et de facilité d'élimination des déchets liés aux effluents.

Enfin, des avantages en termes de consommation d'énergie, de maintenance simplifiée, de gain de place et de confort d'utilisation sont également apportés par le procédé continu selon l'invention par comparaison aux procédés discontinus.

La présente invention concerne également un oligomère et/ou polymère comprenant au moins un motif de répétition diphénylamine et éventuellement au moins un motif de répétition phényl α-naphtylamine susceptible d'être obtenu, en particulier obtenu, par un procédé selon l'invention. Avantageusement, l'oligomère et/ou polymère comprenant au moins un motif de répétition diphénylamine et éventuellement au moins un motif de répétition phényl α-naphtylamine susceptible d'être obtenu, en particulier obtenu, par un procédé selon l'invention est en solution dans le lubrifiant ester.

Dans la présente invention, toute gamme ou tout intervalle défini(e) par des bornes s'entend bornes incluses, sauf précision contraire.

Sauf précision contraire, les pourcentages indiqués dans la présente demande sont des pourcentages en masse.

Par « température ambiante », on désigne dans la présente invention une température d'environ 25°C.

Dans la présente invention, le terme « environ » une valeur V désigne un intervalle compris entre 0,9xV et 1,1xV. Dans certains modes de réalisation, il désigne un intervalle compris entre 0,95xV et 1,05xV, en particulier un intervalle compris entre 0,99xV et 1,01xV.

### Exemples

Les différents essais ont été mis en oeuvre avec les matières premières suivantes :
- mélange de diphénylamines : mélange de N,N-diphénylamine, de N,N-di-(p-tert-butylphényl)amine, de N,N-di-(p-tert-octylphényl)amine, de N-(p-tert-butylphényl)-N-phénylamine, de N-(p-tert-octylphényl)-N-phénylamine et de N-(p-tert-butylphényl)-N-(p-tert-octylphényl)amine connu sous la dénomination Irganox^{®} L57 et de numéro CAS 68411-46-1,
- phényl α-naphtylamine : N-phényl 1,1,3,3-tétraméthylbutylnaphthalén 1-amine
- peroxyde organique : peroxyde de di-tert-butyle,
- introduction des amines en mélange sous la forme d'une solution à 60% massique dans du tri-nonanoate de triméthylol propane,
- introduction du peroxyde organique sous la forme d'une solution à 50% massique dans du tri-nonanoate de triméthylol propane.

### Exemple Comparatif 1 selon le procédé discontinu de l'art antérieur

Pour cet essai comparatif, la Demanderesse a reproduit l'exemple 2 du brevet EP 0 734 432 à partir des matières premières listées ci-dessus.

En particulier, les conditions expérimentales du procédé en discontinu, ainsi que les caractéristiques du produit final sont résumées dans le tableau I ci-dessous :

### [Tableau 1]

**Tableau I**

| **Paramètres** | **Unité** | **Ex. Comp. (batch)** |
|---|---|---|
| Température de bain | °C | 160 |
| Temps d'introduction du peroxide de di-tert-butyle | h | 3h30 |
| Proportion de peroxide de di-tert-butyle n'ayant pas réagi | % | **65** |

| **Caractéristiques du produit formé** | | |
|---|---|---|
| Couleur Gardner min | - | 9,8 |
| Couleur Gardner max | - | **13,8** |
| Teneur en monomères résiduels (n'ayant pas réagi) | % (m/m copolymères) | 4 |

La quantité de peroxyde n'ayant pas réagi a été mesuré dans le distillat. La couleur Gardner a été mesurée sur des échantillons à 0,75% en matière active (polymères aminiques) en masse dans du tri-monoate de triméthylol propane en utilisant un spectromètre (méthode ASTM D 6166-12).

Cet essai comparatif 1 a été reproduit trois fois. Comme le montre le tableau I ci-dessus, le procédé selon l'art antérieur présente une teneur en peroxyde qui n'a pas réagi de l'ordre de 65%. Cette teneur élevée en peroxyde n'ayant pas réagi représente un désavantage certain d'une part, d'un point de vue économique (perte de matières premières), et d'autre part, d'un point de vue sécurité dans la mesure où le stockage et la destruction de l'effluent comprenant le peroxyde est compliqué. De plus, le procédé de l'art antérieur ne permet pas d'obtenir un produit final ayant des caractéristiques constantes, notamment en termes de couleur. L'échantillon issu du procédé discontinu selon l'art antérieur ne présente pas une couleur constance, celle-ci peut varier de 9,8 à 13,8 sur l'échelle Gardner. Or, une couleur de 13,8 correspond à une couleur marron foncé non adapté au domaine de l'automobile et/ou de l'aéronautique.

### Exemples selon le procédé selon l'invention en continu et Exemples comparatifs (procédé en continu, T° de réaction <170°C)

Plusieurs échantillons 1 à 8 ont été produits par la mise en oeuvre d'un procédé selon l'invention dans un réacteur Corning^{®} Advanced-Flow^{™} glass de type G1 présentant le fluide Therminol (fournie par Total) en tant que fluide caloporteur.

Les matières premières utilisées sont les mêmes que celles mentionnées ci-dessus. Les conditions de mise en oeuvre des réactions sont résumées dans le tableau 1 ci-dessous. En particulier, la température de refroidissement est de 70°C.

Des exemples comparatifs 2 à 7 ont également été réalisés selon un procédé en continu à partir des mêmes matières premières et en suivant sensiblement le même mode opératoire, hormis la température lors de l'étape de polymérisation.

**[Tableau 2]**

| **Echantillon** | **Température réacteur (°C)** | **Débit de peroxyde (mL/min)** | **Débit d'amines (mL/min)** | **Equivalents molaires de peroxyde** | **Temps de séjour (min)** | **Contrepression (bar)** | **Pression en entrée (bar)** |
|---|---|---|---|---|---|---|---|
| **Ex. Comp.2** | 100 | 12 | 17,5 | 1 | 0,34 | 5 | - |
| **Ex. Comp.3** | 110 | 12 | 17,5 | 1 | 0,34 | 5 | |
| **Ex. Comp.4** | 120 | 12 | 17,5 | 1 | 0,34 | 5 | |
| **Ex. Comp.5** | 130 | 12 | 17,5 | 1 | 0,34 | 5 | |
| **Ex. Comp.6** | 140 | 12 | 17,5 | 1 | 0,34 | 5 | |
| **Ex. Comp.7** | 150 | 14,3 | 15,7 | 1,3 | 0,33 | 5 | |
| **1** | 180 | 14,3 | 15,7 | 1,3 | 2,00 | 10 | 5 |
| **2** | 180 | 16,4 | 13,6 | 1,6 | 2,00 | 10 | 5 |
| **3** | 190 | 14,3 | 15,7 | 1,3 | 2,00 | 10 | 15 |
| **4** | 190 | 16,4 | 13,6 | 1,6 | 2,0 | 15 | 16 |
| **5** | 200 | 14,3 | 15,7 | 1,3 | 2,0 | 15 | 17 |
| **6** | 200 | 16,2 | 23,6 | 1,3 | 2,01 | 16 | 19 |
| **7** | 200 | 12 | 17,5 | 1,3 | 2,71 | 16 | 18 |
| **8** | 200 | 24 | 35 | 1,3 | 1,36 | 15,5 | 19,5 |

Les résultats obtenus en termes de pourcentage de monomères résiduels, de peroxyde n'ayant pas réagi et de couleur Gardner pour chacun des quatre échantillons sont présentés dans le tableau 3 ci-dessous.

La couleur Gardner a été mesurée sur un échantillon à 1,5% en masse dans du tri-nonanoate de triméthylol propane en utilisant un spectrophotomètre, notamment selon la méthode décrite dans la norme ASTM D6166-12 ou ASTM D 1544. La couleur a été déterminée en considérant qu'il n'y a aucune perte de peroxyde ni d'alcool lors de la réaction en continu.

Le pourcentage de monomères résiduels est un pourcentage en masse, qui a été déterminé par chromatographie en phase gaz (GC) et supercritique (SFC).

Le pourcentage de peroxyde n'ayant pas réagi a été déterminé par chromatographie en phase gazeuse.

**[Tableau 3]**

| **Echantillon** | **% de monomères résiduels** | **% de peroxyde n'ayant pas réagi** | **Couleur Gardner** | **Réaction** |
|---|---|---|---|---|
| **Ex. Comp.2** | 100 | - | - | Non |
| **Ex. Comp.3** | 100 | - | - | Non |
| **Ex. Comp.4** | 100 | - | - | Non |
| **Ex. Comp.5** | 100 | - | - | Non |
| **Ex. Comp.6** | 100 | - | - | Non |
| **Ex. Comp.7** | 100 | - | - | Non |
| **Ex. 1** | 45,5 | 61 | 5,1 | Oui |
| **Ex. 2** | 25 | 88 | 5,9 | Oui |
| **Ex. 3** | 4,40 | 37 | 10,1 | Oui |
| **Ex. 4** | 1,85 | 40 | 9,9 | Oui |
| **Ex. 5** | 4,70 | 10 | 10,9 | Oui |
| **Ex. 6** | 1,9 | 6 | 10,8 | Oui |
| **Ex. 7** | 2,5 | 2 | 10,9 | Oui |
| **Ex. 8** | 3,2 | 15 | 10,6 | Oui |

Le procédé continu selon l'invention permet ainsi d'obtenir des oligomères de diphénylamine et de phényl α-naphtylamine, en quelques minutes, comprenant moins de 45,5% de monomères résiduels et ayant une couleur Gardner claire qui est parfaitement adaptée pour des lubrifiants, notamment ceux destinés à l'aéronautique et/ou à l'automobile. En particulier, une température de réaction de 180°C permet d'obtenir des résultats au moins similaires en termes de % en peroxyde n'ayant pas réagi et de % de monomères résiduels par rapport à l'exemple comparatif 1 selon le procédé de l'art antérieur en discontinu. La couleur Gardner du produit final est cependant beaucoup plus claire (couleur Gardner de 5,1/5,9 pour les exemples 1 et 2 à 180°C contre une couleur Gardner de 13,8 pour l'ex. Comparatif 1). En outre, lorsque la température de réaction est augmentée à au moins 190°C, le procédé continu selon l'invention permet d'obtenir des oligomères de diphénylamine et de phényl α-naphtylamine, en quelques minutes, comprenant moins de 5% de monomères résiduels tout en ayant une couleur Gardner claire (de l'ordre de 10). Les caractéristiques du produit formée sont en outre constantes (couleur Garder constante). En outre, la température de réaction minimale lors de l'étape (b) (180°C) peut être également obtenu avec d'autres réacteurs de type continu capables de mettre en oeuvre des mélanges mixtes composés de substances gazeuses et liquides à des pressions plus basses.

Le procédé est mis en oeuvre en absence de solvant, directement dans le lubrifiant ester dans lequel sont solubilisés les diphénylamines, la phényl α-naphtylamine et le peroxyde organique.

Bien entendu, diverses autres modifications peuvent être apportées à l'invention dans le cadre des revendications annexées.

## Revendications

1. Procédé de préparation d'au moins un oligomère et/ou polymère comprenant au moins un motif de répétition diphénylamine et éventuellement au moins un motif de répétition phényl α-naphtylamine, comprenant les étapes de :
(a) introduction dans un réacteur adapté de :
- au moins une diphénylamine,
- éventuellement au moins une phényl α-naphtylamine ,
- au moins un peroxyde organique, et
- au moins un lubrifiant ester ;
(b) polymérisation ou oligomérisation de la diphénylamine et éventuellement de la phényl α-naphtylamine pour obtenir un mélange comprenant au moins un oligomère ou un polymère comprenant au moins un motif diphénylamine et éventuellement au moins un motif phényl α-naphtylamine, et
(c) soumission du mélange obtenu à l'étape (b) à des conditions adaptées pour réduire et/ou éliminer au moins une partie des réactifs résiduels et/ou des sous-produits de réaction autres que les oligomères ou polymères comprenant au moins un motif diphénylamine et éventuellement au moins un motif phényl α-naphtylamine,
dans lequel les étapes (a) et (b) sont mises en oeuvre en continu et dans lequel l'étape (b) est réalisée à une température allant de 180°C à 250°C.

2. Procédé selon la revendication 1, dans lequel l'étape (b) est réalisée à une température allant de 180°C à 230°C.

3. Procédé selon la revendication 1 ou 2, dans lequel la au moins une diphénylamine est choisie dans le groupe constitué par la N,N-di-(p-tert-butylphényl)amine, la N,N-di-(p-tert-octylphényl)amine, la N-(p-tert-butylphényl)-N-phénylamine, la N-(p-tert-octylphényl)-N-phénylamine, la N-(p-tert-butylphényl)-N-(p-tert-octylphényl)amine et un quelconque mélange de celles-ci.

4. Procédé selon l'une quelconque des revendications 1 à 3, dans laquelle la phényl α-naphtylamine est la N-phényl 1,1,3,3-tétraméthylbutylnaphthalén 1-amine.

5. Procédé selon l'une quelconque des revendications 1 à 4, dans lequel le polymère et/ou oligomère obtenu par le procédé selon l'invention ne comprend dans sa structure que des motifs de répétition diphénylamine et phényl α-naphtylamine.

6. Procédé selon l'une quelconque des revendications 1 à 5, dans lequel la au moins une diphénylamine et/ou la au moins une phényl α-naphtylamine sont introduites dans le réacteur sous la forme d'une solution dans le lubrifiant ester.

7. Procédé selon l'une quelconque des revendications 1 à 6, dans lequel le peroxyde organique est le peroxyde de di-tert-butyle.

8. Procédé selon l'une quelconque des revendications 1 à 7, dans lequel le lubrifiant ester est choisi dans le groupe constitué par le tri-nonanoate de triméthylolpropane et les esters préparés à partir de pentaérythritol et d'au moins un acide carboxylique ramifié comprenant 9 atomes de carbone.

9. Procédé selon l'une quelconque des revendications 1 à 8, dans lequel le procédé comprend, avant l'étape (a), une étape (a1) de prémélange d'au moins deux parmi la au moins une diphénylamine, la au moins une phényl α-naphtylamine, le lubrifiant ester et le peroxyde organique, pour former une solution les comprenant.

10. Procédé selon l'une quelconque des revendications 1 à 9, dans lequel le procédé comprend, avant l'étape (a), une étape (a2) de préchauffage de la au moins une diphénylamine , de la au moins une phényl α-naphtylamine, du lubrifiant ester, du peroxyde organique et/ou de la solution comprenant au moins deux parmi ces derniers à une température supérieure à la température ambiante et inférieure ou égale à la température à laquelle l'étape (b) est mise en oeuvre.

11. Procédé selon l'une quelconque des revendications 1 à 10, dans lequel l'étape (c) est suivie ou précédée d'une étape (d) de refroidissement du au moins un oligomère ou polymère de diphénylamine et éventuellement au moins une phényl α-naphtylamine obtenu à l'issue de l'étape (b) à une température inférieure à la température à laquelle l'étape (b) est mise en oeuvre, et supérieure ou égale à la température ambiante.

12. Procédé selon l'une quelconque des revendications 1 à 11, dans lequel le mélange obtenu à l'étape (b) comprend une teneur en peroxyde n'ayant pas réagi inférieure ou égale à 60%, de préférence inférieure ou égale à 45% et typiquement inférieure ou égale à 40%, la teneur en peroxyde étant déterminée par chromatographie en phase gazeuse.

13. Procédé selon l'une quelconque des revendications 1 à 12, dans lequel le mélange obtenu à l'étape (b) comprend une teneur en monomères résiduels inférieure ou égale à 25%, de préférence inférieure ou égale à 10% et typiquement inférieure ou égale à 5%, la teneur en monomères résiduels est un pourcentage en masse déterminé par chromatographie en phase gaz (GC) et supercritique (SFC).

## Patentansprüche

1. Verfahren zur Herstellung mindestens eines Oligomers und/oder Polymers, das mindestens eine Diphenylamin-Repetiereinheit und gegebenenfalls mindestens eine Phenyl-α-naphtylamin-Repetiereinheit umfasst, das die folgenden Schritte umfasst:
(a) die Einführung in einen geeigneten Reaktor:
- mindestens eines Diphenylamins,
- gegebenenfalls mindestens eines Phenyl-α-naphtylamins,
- mindestens eines organischen Peroxids und
- mindestens eines Estergleitmittels;
(b) die Polymerisation oder Oligomerisation des Diphenylamins und gegebenenfalls des Phenyl-α-naphtylamins, um eine Mischung zu erhalten, die mindestens ein Oligomer oder Polymer umfasst, das mindestens eine Diphenylamin-Einheit und gegebenenfalls mindestens eine Phenyl-α-naphtylamin-Einheit umfasst, und
(c) das Einwirkenlassen von Bedingungen auf die in Schritt (b) erhaltene Mischung, die dazu geeignet sind, zumindest einen Teil der restlichen Reagenzien und/oder von Nebenprodukten der Reaktion, die von den Oligomeren oder Polymeren verschieden sind, die mindestens eine Diphenylamin-Einheit und gegebenenfalls mindestens eine Phenyl-α-naphtylamin-Einheit umfassen, zu reduzieren und/oder zu eliminieren,
wobei die Schritte (a) und (b) kontinuierlich durchgeführt werden und wobei Schritt (b) bei einer Temperatur von 180 °C bis 250 °C erfolgt.

2. Verfahren nach Anspruch 1, wobei Schritt (b) bei einer Temperatur von 180 °C bis 230 °C erfolgt.

3. Verfahren nach Anspruch 1 oder 2, wobei das mindestens eine Diphenylamin ausgewählt ist aus der Gruppe bestehend aus N,N-Di-(p-tert-butylphenyl)amin, N,N-Di-(p-tert-octylphenyl)amin, N-(p-tert-Butylphenyl)-N-phenylamin, N-(p-tert-Octylphenyl)-N-phenylamin, N-(p-tert-Butylphenyl)-N-(p-tert-octylphenyl)amin und einer beliebigen Mischung davon.

4. Verfahren nach einem der Ansprüche 1 bis 3, wobei es sich beim Phenyl-α-naphthylamin um N-Phenyl-1,1,3,3-tetramethylbutylnaphthalin-1-amin handelt.

5. Verfahren nach einem der Ansprüche 1 bis 4, wobei das durch das erfindungsgemäße Verfahren erhaltene Polymer und/oder Oligomer in seiner Struktur nur Diphenylamin- und Phenyl-α-naphtylamin-Repetiereinheiten umfasst.

6. Verfahren nach einem der Ansprüche 1 bis 5, wobei das mindestens eine Diphenylamin und/oder das mindestens eine Phenyl-α-naphtylamin in Form einer Lösung im Estergleitmittel in den Reaktor eingeführt werden.

7. Verfahren nach einem der Ansprüche 1 bis 6, wobei es sich beim organischen Peroxid um Di-tert-Butylperoxid handelt.

8. Verfahren nach einem der Ansprüche 1 bis 7, wobei das Estergleitmittel ausgewählt ist aus der Gruppe bestehend aus Trimethylolpropantrinonanoat und Estern, die aus Pentaerythrit und mindestens einer 9 Kohlenstoffatome umfassenden verzweigten Carbonsäure hergestellt sind.

9. Verfahren nach einem der Ansprüche 1 bis 8, wobei das Verfahren vor Schritt (a) einen Schritt (a1) des Vormischens von mindestens zwei des mindestens einen Diphenylamins, des mindestens einen Phenyl-α-naphtylamins, des Estergleitmittels und des organischen Peroxids umfasst, um eine Lösung zu bilden, die sie enthält.

10. Verfahren nach einem der Ansprüche 1 bis 9, wobei das Verfahren vor Schritt (a) einen Schritt (a2) des Vorwärmens des mindestens einen Diphenylamins, des mindestens einen Phenyl-α-naphtylamins, des Estergleitmittels, des organischen Peroxids und/oder der Lösung, die mindestens zwei davon umfasst, bei einer Temperatur umfasst, die höher als die Umgebungstemperatur und niedriger als die oder gleich der Temperatur ist, bei der Schritt (b) durchgeführt wird.

11. Verfahren nach einem der Ansprüche 1 bis 10, wobei Schritt (c) von einem Schritt (d) des Kühlens des mindestens einen aus Schritt (b) erhaltenen Oligomers oder Polymers von Diphenylamin und gegebenenfalls mindestens einem Phenyl-α-naphtylamin bei einer Temperatur, die niedriger als die Temperatur, bei der Schritt (b) durchgeführt wird, und höher als die oder gleich der Umgebungstemperatur ist, gefolgt wird oder diesem vorausgeht.

12. Verfahren nach einem der Ansprüche 1 bis 11, wobei die in Schritt (b) erhaltene Mischung einen Gehalt an nicht umgesetztem Peroxid von weniger als oder gleich 60 %, vorzugsweise weniger als oder gleich 45 % und typischerweise weniger oder als 40 % umfasst, wobei der Peroxidgehalt mittels Gaschromatografie bestimmt wird.

13. Verfahren nach einem der Ansprüche 1 bis 12, wobei die in Schritt (b) erhaltene Mischung einen Gehalt an restlichen Monomeren von weniger als oder gleich 25 %, vorzugsweise weniger als oder gleich 10 % und typischerweise weniger oder als 5 % umfasst, wobei der Gehalt an restlichen Monomeren ein Masseprozentwert ist, der mittels Gas- (GC) und überkritischer Chromatografie (SFC) bestimmt wird.

## Claims

1. A process for preparing at least one oligomer and/or polymer comprising at least one diphenylamine repeat unit and optionally at least one phenyl α-naphthylamine repeat unit, comprising the following steps:
(a) the introduction into a suitable reactor of:
- at least one diphenylamine,
- optionally at least one phenyl α-naphthylamine,
- at least one organic peroxide, and
- at least one ester lubricant;
(b) the polymerisation or oligomerisation of diphenylamine and optionally of phenyl α-naphthylamine to obtain a mixture comprising at least one oligomer or a polymer comprising at least one diphenylamine unit and optionally at least one phenyl α-naphthylamine unit, and
(c) subjecting the mixture obtained at step (b) to conditions suitable for reducing and/or eliminating at least part of the residual reagents and/or reaction by-products other than the oligomers or polymers comprising at least one diphenylamine unit and optionally at least one phenyl α-naphthylamine unit,
wherein steps (a) and (b) are implemented continuously and wherein step (b) is carried out at a temperature equal to or higher ranging from 180°C to 250°C.

2. The process according to claim 1, wherein step (b) is carried out at a temperature ranging from 180°C to 230°C.

3. The process according to claim 1 or 2, wherein the at least one diphenylamine is selected from the group consisting of N,N-di-(p-tert-butylphenyl)amine, N,N-di-(p-tert-octylphenyl)amine, N-(p-tert-butylphenyl)-N-phenylamine, N-(p-tert-octylphenyl)-N-phenylamine, N-(p-tert-butylphenyl)-N-(p-tert-octylphenyl)amine and any mixture thereof.

4. The process according to any one of claims 1 to 3, wherein the phenyl α-naphthylamine is N-phenyl 1,1,3,3-tetramethylbutylnaphthalen 1-amine.

5. The process according to any one of claims 1 to 4, wherein the polymer and/or oligomer obtained by the process according to the invention comprises in its structure only diphenylamine and phenyl α-naphthylamine repeat units.

6. The process according to any one of claims 1 to 5, wherein the at least one diphenylamine and/or the at least one phenyl α-naphthylamine are introduced into the reactor in the form of a solution in the ester lubricant.

7. The process according to any one of claims 1 to 6, wherein the organic peroxide is di-tert-butyl peroxide.

8. The process according to any one of claims 1 to 7, wherein the ester lubricant is selected from the group consisting of trimethylolpropane tri-nonanoate and esters prepared from pentaerythritol and at least one branched carboxylic acid comprising 9 carbon atoms.

9. The process according to any one of claims 1 to 8, wherein the process comprises, before step (a), a step (a1) of premixing at least two among the at least one diphenylamine, the at least one phenyl α-naphthylamine, the ester lubricant and the organic peroxide, to form a solution comprising them.

10. The process according to any one of claims 1 to 9, wherein the process comprises, before step (a), a step (a2) of preheating the at least one diphenylamine, the at least one phenyl α-naphthylamine, ester lubricant, organic peroxide and/or a solution comprising at least two among these at a temperature higher than room temperature and lower than or equal to the temperature at which step (b) is implemented.

11. The process according to any one of claims 1 to 10, wherein step (c) is followed or preceded by a step (d) of cooling the at least one oligomer or polymer of diphenylamine and optionally at least one phenyl α-naphthylamine obtained upon completion of step (b) at a temperature lower than the temperature at which step (b) is implemented, and higher than or equal to room temperature.

12. The process according to any one of claims 1 to 11, wherein the mixture obtained at step (b) comprises an unreacted peroxide content lower than or equal to 60%, preferably lower than or equal to 45% and typically lower than or equal to 40%, the peroxide content being determined by gas-phase chromatography.

13. The process according to any one of claims 1 to 12, wherein the mixture obtained at step (b) comprises a residual monomer content lower than or equal to 25%, preferably lower than or equal to 10% and typically lower than or equal to 5%, the residual monomer content is a mass percentage determined by gas-phase (GC) and supercritical (SFC) chromatography.
